# EUROPÄISCHE PATENTSCHRIFT

(11) **EP 1 995 476 B1**
(45) Veröffentlichungstag und Bekanntmachung des Hinweises auf die Patenterteilung: **21.07.2010**
(21) Anmeldenummer: 08154465.2
(22) Anmeldetag: 14.04.2008
(51) Int. Cl.: F16C 19/38, F16C 33/61

(54) **Drahtwälzlager**
Wire roller bearing
Roulement à fils

(30) Priorität: 23.05.2007 DE 102007023976
(43) Veröffentlichungstag der Anmeldung: 26.11.2008
(73) Patentinhaber: Schaeffler KG, 91074 Herzogenaurach (DE)
(72) Erfinder: Oetjen, Jürgen, 91074 Herzogenaurach (DE)

(56) Entgegenhaltungen:
- EP-A- 0 245 593
- EP-A- 0 577 963
- DE-A1- 2 209 159
- US-A- 2 917 351

## Beschreibung

### Gebiet der Erfindung

Die Erfindung betrifft ein mehrreihiges Drahtwälzlager, bestehend aus zwei konzentrisch ineinander angeordneten Tragringen, die ineinander zugekehrten Ausnehmungen Laufdrähte aufweisen, zwischen denen wenigstens zwei aus einem Käfig und Zylinderrollen bestehende Wälzkörperkränze abrollen, wobei wenigstens ein Laufdraht zwei symmetrisch zueinander angeordnete, unter einem Winkel zu einer Lagerachse verlaufende Laufbahnen aufweist.

### Hintergrund der Erfindung

Es ist allgemein bekannt, dass sich Stahlringe beim Härten verziehen. Dies ist der Hauptgrund dafür, dass die Ringe genau laufender Wälzlager nach dem Härten geschliffen werden müssen. Der Aufwand für das Schleifen steigt mit dem Durchmesser der Lagerringe an, sodass der Einbau genau laufender Wälzlager mit großen Durchmessern im Allgemeinen nicht mehr wirtschaftlich ist. Die ungünstigen Einflüsse der Härtung lassen sich durch die Verwendung ungehärteter Rollbahnen oder auch durch die Trennung der Rollbahnen vom den umschließenden Tragringen beseitigen. Ein Lager mit ungehärteten Rollbahnen besitzt jedoch eine geringe Tragfähigkeit. Es machen sich schon bei geringen Belastungen Rollbahneindrückungen durch Geräuschbildung und hakenden Lauf des Lagers bemerkbar.

Die zweite Möglichkeit, die in der Trennung der Rollbahnen von den umschließenden Tragringen besteht, ist durch Drahtwälzlager verwirklicht worden. Die hierbei verwendeten Rollbahndrähte bestehen aus hartem Stahl, sind aber trotzdem wegen ihres geringen Querschnittes elastisch und verwendungsweich. Sie legen sich unter dem Wälzkörperdruck fest an die umschließenden ungehärteten Tragringe an, sodass diese maßgebend für die Laufgenauigkeit des Lagers sind. Der Einbau von Drahtwälzlagern ist auch bei großen Durchmessern und hohen Laufgenauigkeiten noch wirtschaftlich.

Ein gattungsgemäß ausgebildetes doppelreihiges Drahtwälzlager ist aus der DE 22 09 159 A vorbekannt. Es enthält als Bauteile, die als Laufbahnen ausgebildet sind, Drahtkörper unterschiedlicher Querschnittsformen und Abmessungen, die mit kreisbogenförmig gewölbten Rücken am Innenring und am Au-βenring abgestützt sind. Dabei weist für die als Zylinderrollen ausgebildeten Wälzkörper ein mittlerer Drahtkörper zwei Laufbahnen auf, während sich an zwei äußeren Drahtkörpern jeweils eine Laufbahn befindet. Es sind hier also mindestens zwei verschiedene Drahtkörperquerschnitte erforderlich, von denen vor allem der mittlere sehr teuer in der Herstellung ist. Diese Ausführungsform eignet sich nicht für Lagerstellen, die ein gewisses Maß an Präzision erfordern, weil die Drahtkörper hierzu allseitig geschliffen werden müssen. Dies ist jedoch nur bei ebenen oder zylindrischen Flächen zu vertretbaren Kosten möglich. Ein weiterer Nachteil ist dadurch begründet, dass einer der Lagerringe zweiteilig ausgebildet ist, wobei die Vorspannung des Lagers in aufwändiger Weise mit Hilfe einer Abstimmscheibe eingestellt werden muss. Demnach müssen eine Vielzahl von unterschiedlich dimensionierten Abstimmscheiben vorrätig gehalten werden, was eine aufwändige Lagerhaltung und eine erschwerte Montage bewirkt.

### Zusammenfassung der Erfindung

Ausgehend von den Nachteilen des bekannten Standes der Technik liegt der Erfindung daher die Aufgabe zugrunde, ein gattungsgemäß ausgebildetes Drahtwälzlager bereitzustellen, welches einen einfachen konstruktiven Aufbau aufweist, sich kostengünstig herstellen lässt und eine einfache Einstellung der Lagervorspannung ermöglicht.

Erfindungsgemäß wird diese Aufgabe nach dem kennzeichnenden Teil von Anspruch 1 in Verbindung mit dessen Oberbegriff dadurch gelöst, dass alle Laufdrähte einen gleichen prismatischen Querschnitt aufweisen und mit wenigstens zwei Anlageflächen in den Ausnehmungen aufgenommen sind, die Tragringe einstückig ausgebildet sind und in einem Tragring die Anzahl der Laufdrähte n und im zugehörigen anderen Tragring n+1 ist.

Der Vorteil des erfindungsgemäß ausgebildeten Drahtlagers liegt darin, dass dessen Herstellung wesentlich vereinfacht ist. Es ist nicht mehr erforderlich, den äußeren Tragring zweiteilig mit genau zueinander fluchtenden Trennflächen auszubilden, sodass die Abstimmung der Lagervorspannung mit aufwändigen Distanzscheiben entbehrlich ist. Es ist weiter von Vorteil, dass sämtliche Laufdrähte einen gleichen prismatischen Querschnitt aufweisen, sodass die Handhabung nochmals vereinfacht ist, weil sowohl im äußeren als auch im inneren Tragring die gleichen Drahtquerschnitte untergebracht werden. Durch den prismatischen Querschnitt ergibt sich als weiterer Vorteil, dass die Laufdrähte mit wenigstens zwei Anlageflächen kippfest in den Ausnehmungen aufgenommen sind. Schließlich ist als weiterer Vorteil der zu nennen, dass die Laufdrähte als gezogene Präzisionsdrähte als genormte Bauteile in vielfältigen Ausführungsvarianten hinsichtlich geometrische Abmessungen und Material auf dem Markt kostengünstig zu erwerben sind.

Weitere vorteilhafte Ausführungsvarianten der Erfindung sind in den Unteransprüchen beschrieben.

So hat es sich nach Anspruch 2 als vorteilhaft erwiesen, wenn der Laufdraht ein Vierkantprofil oder ein Sechskantprofil aufweist. Wie bereits ausgeführt, sorgt dieses Profil dafür, dass ein sicherer Halt in der Ausnehmung realisiert ist. Außerdem lässt sich in einfacher Weise über das Vierkantprofil oder das Sechskantprofil auf den Neigungswinkel der abwälzenden Zylinderrollen Einfluss nehmen, sodass das Lager hinsichtlich der Aufnahme von radialen und axialen Kräften in idealer Weise beeinflussbar ist.

Nach einem weiteren Merkmal gemäß Anspruch 3 hat es sich auch als vorteilhaft erwiesen, dass einer der Tragringe in Umfangsrichtung einen Radialschlitz aufweist, der sich über einen Teil seiner axialen Stärke erstreckt, sodass zwei durch den Radialschlitz voneinander beabstandete Teilringe gebildet sind, die in axialer Richtung durch ein Spannelement aufeinander zu- oder wegbewegbar sind.

Dadurch kann in einfacher Weise auf die Lagervorspannung eingewirkt werden, weil durch die Bewegung in axialer Richtung der beiden Teilringe aufeinander die Wälzkörper unter Vorspannung gesetzt werden können. In diesem Zusammenhang hat es sich nach Anspruch 4 als vorteilhaft erwiesen, dass das Spannelement eine mit einem Gewinde versehene Schraube ist, die einerseits in eine erste Aufnahmebohrung eines der Teilringe und andererseits in eine zweite zugehörige Aufnahmebohrung mit einem Innengewinde des anderen Teilringes eingesetzt ist, wobei mehrere Schraube an voneinander beabstandeten Umfangsstellen eingesetzt sind. Derartige Schrauben sind als Massenteile auf dem Zuliefermarkt in mannigfaltigen Ausführungen und unterschiedlichen Größenverhältnissen kostengünstig erwerbbar.

Nach einem weiteren Merkmal gemäß Anspruch 5 ist die Lagervorspannung derart einstellbar, dass einer der Tragringe einen durchgehenden Längsschlitz aufweist, der mit Hilfe eines Spannelementes in seiner Umfangsausdehnung veränderbar ist. In diesem Zusammenhang hat es sich gemäß Anspruch 6 als vorteilhaft erwiesen, dass der Tragring an seinem ersten vom Längsschnitt benachbarten Ende eine radial nach außen offene Ausnehmung aufweist, die in Richtung des Längsschlitzes durch eine Durchgangsbohrung fortgesetzt ist, während ein zweites vom Längsschlitz benachbart angeordnetes Ende eine mit einem Gewinde versehene Bohrung aufweist, in die eine mit einem Gewinde versehene Schraube als Spannelement eingesetzt ist. Beim Anziehen dieser Spannschraube werden die beiden Enden des geschlitzten Tragringes aufeinander zu bewegt, sodass sein Durchmesser verkleinert und demzufolge die Lagerspannung erhöht wird.

Schließlich hat es sich nach einem letzten Merkmal der Erfindung gemäß Anspruch 7 als vorteilhaft erwiesen, dass der Käfig als ein Verbundkäfig ausgebildet ist, dessen in Umfangsrichtung voneinander beabstandete Käfigsegmente durch einen Drahtring miteinander verbunden sind.

Auf diese Weise ist es möglich, auch für Wälzkreise von über 1000 mm einen Käfig recht schnell und kostengünstig ohne hohe Werkzeugkosten bereitzustellen, da sich die Umfangsgröße des Käfigs lediglich durch die Aneinanderreihung von einzelnen Käfigsegmenten ergibt, die durch den Drahtring miteinander verbunden sind.

Weitere Merkmale der Erfindung ergeben sich aus der nachfolgenden Beschreibung und aus den Zeichnungen, in denen zwei Ausführungsbeispiele der Erfindung in vereinfachter Form dargestellt sind.

### Kurze Beschreibung der Zeichnungen

Es zeigen:
- Figur 1: einen teilweisen Längsschnitt durch eine erste Variante eines erfindungsgemäßen Drahtwälzlagers,
- Figur 2: einen teilweisen Längsschnitt durch eine zweite Variante eines erfindungsgemäßen Drahtwälzlagers und
- Figur 3: einen Schnitt entlang der Linie III-III in Figur 2.

### Ausführliche Beschreibung der Zeichnungen

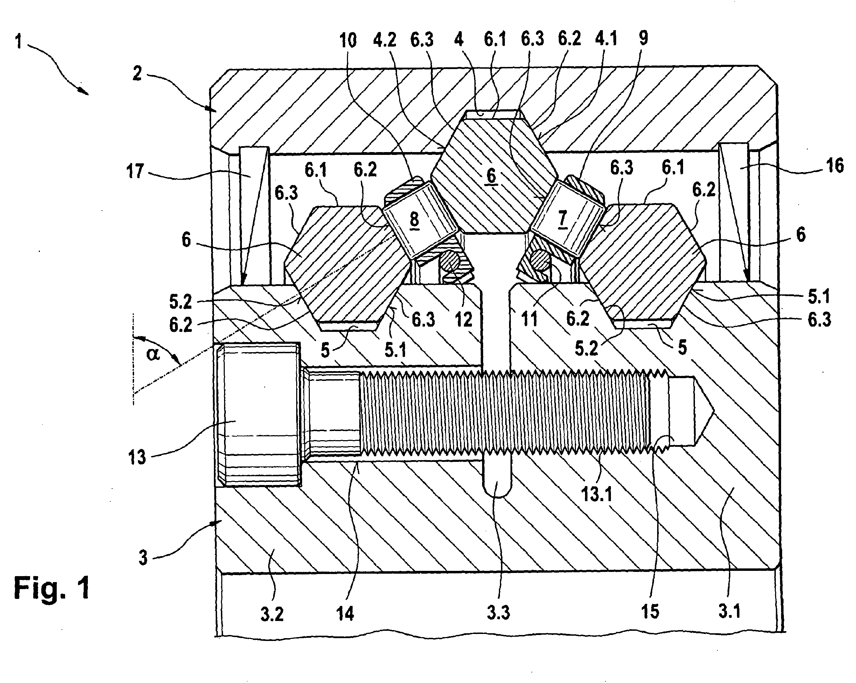

Das in Figur 1 dargestellte und mit 1 bezeichnete Drahtwälzlager ist als ein doppelreihiges Schrägrollenlager ausgebildet und kann beispielsweise als Drehverbindung in der Computertomographie (CT) eingesetzt werden. Im Einzelnen weist das Drahtwälzlager 1 den äußeren Tragring 2 und den inneren Tragring 3 auf, die konzentrisch ineinander angeordnet sind. Während der äußere Tragring 2 eine radial nach innen offene Ausnehmung 4 aufweist, ist der innere Tragring 3 mit zwei radial nach außen offenen Ausnehmungen 5 versehen, die in axialer Richtung voneinander beabstandet sind und zwischen sich die Ausnehmung 4 des äußeren Tragringes 2 einschließen. Die Ausnehmungen 4, 5 sind trapezförmig ausgestaltet und besitzen mit 4.1, 4.2, 5.1, 5.2 bezeichnete Schenkel, die als Anlageflächen für die Laufdrähte 6 dienen. Die Laufdrähte 6 sind als Sechskant ausgebildet und weisen jeweils zwei gegenüber liegende Seitenlängen 6.1, 6.2, 6.3 auf, wobei die Seiten längen 6.2, 6.3 des im äußeren Tragring 2 angeordneten Laufdrahtes 6 und die Seitenlängen 6.3, 6.2 der im inneren Tragring 3 angeordneten Laufdrähte 6 als Anlageflächen dienen. Durch die Übereinstimmung dieser Seitenlängen 6.1, 6.2, 6.3 mit den Schenkeln 4.1, 4.2, 5.1, 5.2 ist sichergestellt, dass ein einwandfreier Sitz der Laufdrähte 6 in beiden Tragringen 2, 3 realisiert ist.

Wie aus Figur 1 weiter erkennbar, stellt der im äußeren Tragring 2 angeordnete Laufdraht 6 mit seinen Seitenlängen 6.3, 6.2 die Laufbahnen für die Zylinderrollen 7, 8. Die zugehörige andere Laufbahn der Zylinderrollen 7, 8 wird einerseits von der Seitenlänge 6.3 des rechtsseitig angeordneten Laufdrahtes 6 und andererseits von der Seitenlänge 6.2 des linksseitig angeordneten Laufdraht 6 gestellt. Die beiden Zylinderrollen 7, 8 sind in O-Anordnung zueinander angestellt, d. h., ihre Wälzkörperdrucklinien verlaufen ausgehend vom im äu-βeren Tragring 2 angeordneten Laufdraht 6 schräg nach außen über die beiden im inneren Tragring 3 angeordneten Laufdrähte 6. Der Neigungswinkel α zu einer nicht dargestellten Lagerachse ist in Figur 1 mit etwa 60° angegeben. Wie weiter erkennbar, sind die Zylinderrollen 7, 8 in einzelnen Käfigsegmenten 9, 10 untergebracht, die mit einem Drahtring 11, 12 untereinander verbunden sind.

Wie auch dargestellt, besteht der innere Tragring 3 aus den beiden Teilringen 3.1 und 3.2, die durch den Radialschlitz 3.3 voneinander getrennt sind, wobei sich der Radialschlitz 3.3 nur über einen Teil der radialen Wandstärke des inneren Tragringes 3 erstreckt. Oder anders ausgedrückt, der innere Tragring 3 ist dennoch als einteiliges Bauteil hergestellt. Der linksseitig angeordnete Teilring 3.2 ist mit der Aufnahmebohrung 14 ausgestaltet, während der rechtsseitig angeordnete Teilring 3.1 die Aufnahmebohrung 15 aufweist. Die Spannschraube 13, deren nicht näher bezeichneter Schaft mit dem Außengewinde 13.1 versehen ist, durchsetzt beide Aufnahmebohrungen 14, 15, wobei die rechtsseitig angeordnete Aufnahmebohrung 15 ein nicht bezeichnetes Innengewinde aufweist, in das das Außengewinde 13.1 der Spannschraube 13 eingreift. Wird diese nun eingedreht, so wird der Radialschlitz 3.3 verringert, sodass die Laufdrähte 6, die im inneren Tragring 3 angeordnet sind, aufeinander zu bewegt werden und dadurch die beiden Zylinderrollenreihen 7, 8 in Richtung auf den Laufdraht 6 bewegen, der im äußeren Tragring 2 untergebracht ist. Auf diese Weise ist in einfacher Weise die Einstellung der Vorspannung der Lageranordnung möglich. Schließlich gehört zum Lager noch je eine Dichtscheibe 16, 17, die zwischen beiden Tragringen 2, 3 angeordnet ist und das Lager einerseits vor Schmiermittelaustritt und andererseits vor Schmutzeintritt schützt.

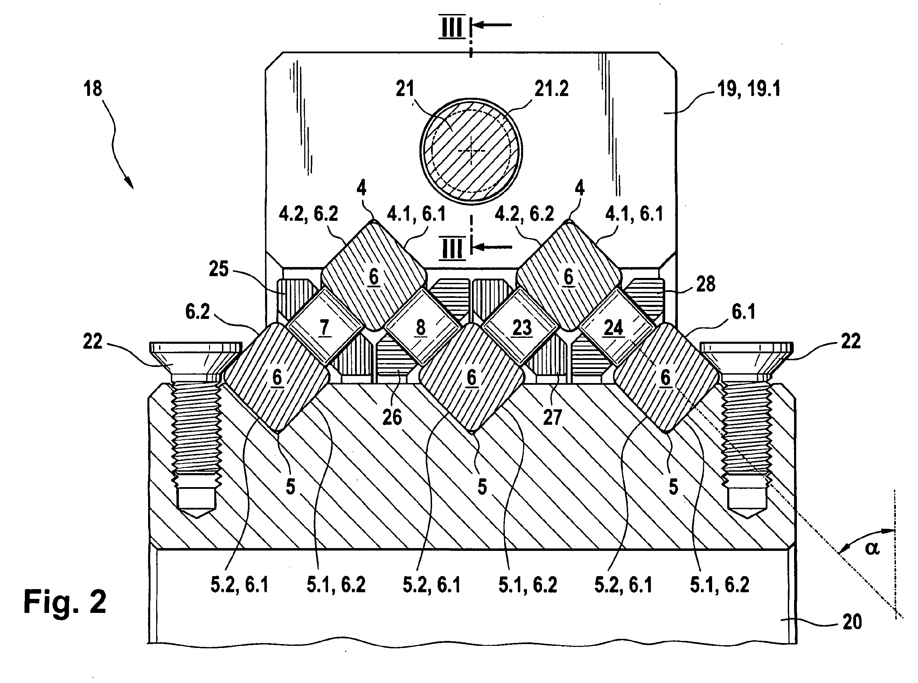

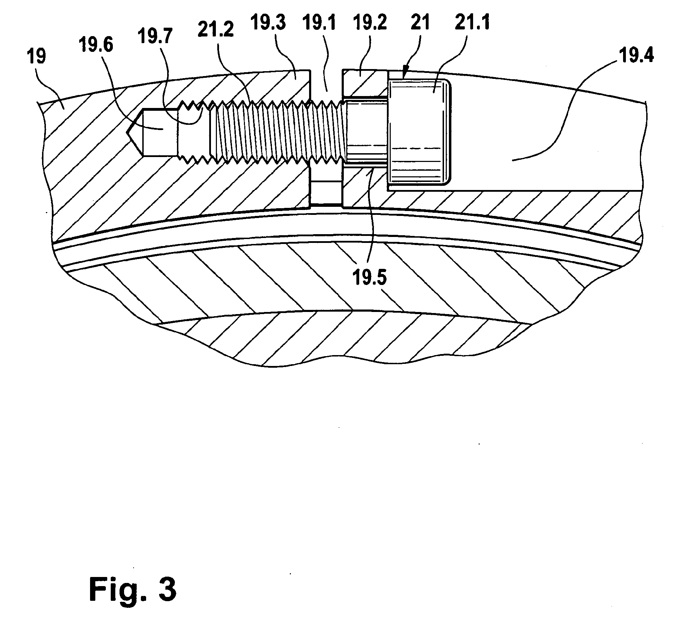

Die in den Figuren 2, 3 dargestellte Erfindungsvariante zeichnet sich dadurch aus, dass das Drahtwälzlager 18 vierreihig ausgebildet ist, wobei in Käfigen 25, 26, 27, 28 geführte Zylinderrollen 7, 8, 23, 24 auf Laufdrähten 6 abwälzen, die im Querschnitt betrachtet ein Vierkantprofil aufweisen, wobei jeweils zwei Seitenlängen 6.1, 6.2 sich gegenüberliegen. Entsprechend diesem Vierkantprofil der Laufdrähte 6 sind die Ausnehmungen 4, 5 in den Tragringen 19, 20 dreieckförmig ausgebildet und weisen die beiden gleichlangen Schenkel 4.1, 4.2, 5.1, 5.2 auf. Dementsprechend liegen die Laufdrähte 6 mit ihren Seitenlängen 6.1, 6.2, 6.2, 6.1 an den Schenkeln 4.1, 4.2, 5.1, 5.2 der Ausnehmungen 4, 5 an. Dabei hat es sich als zweckmäßig erwiesen, die im inneren Tragring 20 beidseitig außen angeordneten Laufringe 6 mit Hilfe von Befestigungsschrauben 22 zu sichern, die an mehreren gleichmäßig in Umfangsrichtung voneinander beabstandeten Stellen in den inneren Tragring 20 eingeschraubt sind.

Wie aus den Figuren 2 und 3 weiter erkennbar, ist der äußere Tragring 19 mit einem durchgehenden Längsschlitz 19.1 versehen, der parallel zu einer nicht dargestellten Lagerachse verläuft. Auf diese Weise ist der einstückige äußere Tragring 19 mit einem ersten und einem zweiten Ende 19.2, 19.3 ausgestattet, die sich in Umfangsrichtung gegenüberliegen. Im ersten Ende 19.2 des äußeren Tragringes 19 ist die Ausnehmung 19.4 angeordnet, die in radialer Richtung nach außen offen ist. Diese Ausnehmung 19.4 wird in Umfangsrichtung hin zum Längsschlitz 19.1 durch die Durchgangsbohrung 19.5 fortgesetzt. Das zweite Ende 19.3 des äußeren Tragringes 19 ist mit der weiteren Bohrung 19.6 versehen, die ein Innengewinde 19.7 trägt und mit der Durchgangsbohrung 19.5 fluchtet. Über die im äußeren Tragring 19 rechtsseitig angeordnete Ausnehmung 19.4 wird nun die mit dem Kopf 21.1 und dem Außengewinde 21.2 versehene Spannschraube 21 eingeführt, wobei deren Schaft die Durchgangsbohrung 19.5 und die Bohrung 19.6 durchsetzt. Beim Einschrauben und Verdrehen der Spannschraube 21 liegt deren Kopf 21.1 am linksseitigen Ende der Ausnehmung 19.4 an und bewegt die beiden Enden 19.2, 19.3 aufeinander zu, sodass der Längsschlitz 19.1 in seiner Umfangsausdehnung verringert ist. Auf diese Weise wird der Durchmesser des äußeren Tragringes 19 verkleinert und somit die Vorspannung des Lagers 18 erhöht. Es ist auch in umgekehrter Weise möglich, die Spannschraube 21 wieder zu lösen, sodass der Längsschlitz 19.1 zwischen den beiden Enden 19.2, 19.3 des äußeren Tragringes 19 in seiner Umfangsausdehnung wieder vergrößert wird.

Auf diese Weise sind robuste, mehrreihige Drahtwälzlager 1, 18 hoher Eigensteifigkeit geschaffen, die für die Aufnahme von hohen Axial-, Radial- und Momentbelastungen ausgelegt sind. Diese Drahtlager 1, 18 verwenden baugleiche Laufdrähte 6, die sich aufgrund ihres prismatischen Querschnittes in den Ausnehmungen 4, 5 der Tragringe 2, 3, 19, 20 selbst zentrieren. Sowohl die inneren 3, 20 als auch die äußeren Tragringe 2, 19 sind einstückig ausgebildet, wobei die Einstellung der Lagervorspannung in einfacher Weise entweder über den inneren 3 oder den äußeren Tragring 19 problemlos möglich ist.

## Patentansprüche

1. Mehrreihiges Drahtwälzlager (1, 18), bestehend aus zwei konzentrisch ineinander angeordneten Tragringen (2, 3, 19, 20), die in einander zugekehrten Ausnehmungen (4, 5) Laufdrähte (6) aufweisen, zwischen denen wenigstens zwei aus einem Käfig und Zylinderrollen (7, 8) bestehende Wälzkörperkränze abrollen, wobei wenigstens ein Laufdraht (6) zwei symmetrisch zueinander angeordnete, unter einem Winkel (α) zu einer Lagerachse verlaufende Laufbahnen (6.3, 6.2, 6.1) aufweist, **dadurch gekennzeichnet, dass** alle Laufdrähte (6) einen gleichen prismatischen Querschnitt aufweisen und mit wenigstens zwei Anlageflächen (6.2-6.3, 6.3-6.2, 6.1-6.2, 6.2-6.1) in den Ausnehmungen (4, 5) aufgenommen sind, die Tragringe (2, 3, 19, 20) einstückig ausgebildet sind und in einem Tragring (2, 19) die Anzahl der Laufdrähte (6) n und im zugehörigen anderen Tragring (3, 20) n+1 ist.

2. Mehrreihiges Drahtwälzlager (1, 18) nach Anspruch 1, **dadurch gekennzeichnet, dass** der Laufdraht (6) ein Vierkantprofil oder ein Sechskantprofil aufweist.

3. Mehrreihiges Drahtwälzlager (1) nach Anspruch 1, **dadurch gekennzeichnet, dass** einer der Tragringe (3) in Umfangsrichtung einen Radialschlitz (3.3) aufweist, der sich über einen Teil seiner axialen Stärke erstreckt, so dass zwei durch den Radialschlitz (3.3) voneinander beabstandete Teilringe (3.1, 3.2) gebildet sind, die in axialer Richtung durch ein Spannelement (13) aufeinander zu- oder wegbewegbar sind.

4. Mehrreihiges Drahtwälzlager (1) nach Anspruch 3, **dadurch gekennzeichnet, dass** das Spannelement eine mit einem Gewinde (13.1) versehene Schraube (13) ist, die einerseits in eine erste Aufnahmebohrung (14) eines der Teilringe (3.2) und andererseits in eine zweite zugehörige Aufnahmebohrung (15) mit einem Innengewinde des anderen Teilringes (3.1) eingesetzt ist, wobei mehrere Schraube (13) an voneinander beabstandeten Umfangsstellen eingesetzt sind.

5. Mehrreihiges Drahtwälzlager (18) nach Anspruch 1, **dadurch gekennzeichnet, dass** einer der Tragringe (19) einen durchgehenden Längsschlitz (19.1) aufweist, der mit Hilfe eines Spannelementes (21) in seiner Umfangsausdehnung veränderbar ist.

6. Mehrreihiges Drahtwälzlager (18) nach Anspruch 5, **dadurch gekennzeichnet, dass** der Tragring (19) an einem ersten vom Längsschlitz (19.1) benachbarten Ende (19.2) eine radial nach außen offene Ausnehmung (19.4) aufweist, die in Richtung des Längsschlitzes (19.1) durch eine Durchgangsbohrung (19.5) fortgesetzt ist, während ein zweites vom Längsschlitz (19.1) benachbart angeordnetes Ende (19.3) eine mit einem Gewinde (19.7) versehene Bohrung (19.6) aufweist, in die eine mit einem Gewinde (21.2) versehene Schraube (21) eingesetzt ist.

7. Mehrreihiges Drahtwälzlager (1) nach Anspruch 1, **dadurch gekennzeichnet, dass** der Käfig als ein Verbundkäfig ausgebildet ist, dessen in Umfangsrichtung voneinander beabstandete Käfigsegmente (9, 10) durch einen Drahtring (11,12) miteinander verbunden sind.

## Claims

1. Multiple-row wire rolling bearing (1, 18), consisting of two carrying rings (2, 3, 19, 20) which are arranged concentrically one in the other and in mutually confronting recesses (4, 5) have running wires (6), between which roll at least two rolling-body crowns consisting of a cage and of cylindrical rollers (7, 8), at least one running wire (6) having two raceways (6.3, 6.2, 6.1) arranged symmetrically to one another and running at an angle (α) with respect to a bearing axis, **characterized in that** all the running wires (6) have an identical prismatic cross section and are received with at least two bearing faces (6.2-6.3, 6.3-6.2, 6.1-6.2, 6.2-6.1) in the recesses (4, 5), the carrying rings (2, 3, 19, 20) are produced in one piece, and the number of running wires (6) in one carrying ring (2, 19) is n and in the associated other carrying ring (3, 20) is n+1.

2. Multiple-row wire rolling bearing (1, 18) according to Claim 1, **characterized in that** the running wire (6) has a square profile or a hexagonal profile.

3. Multiple-row wire rolling bearing (1) according to Claim 1, **characterized in that** one of the carrying rings (3) has in the circumferential direction a radial slot (3.3) which extends over part of the axial thickness of the said carrying ring, so as to form two part-rings (3.1, 3.2) which are spaced apart from one another by the radial slot (3.3) and which can be moved towards or away from one another in the axial direction by means of a tension element (13).

4. Multiple-row wire rolling bearing (1) according to Claim 3, **characterized in that** the tension element is a screw (13) which is provided with a thread (13.1) and which is inserted, on the one hand, into a first reception bore (14) of one of the part-rings (3.2) and, on the other hand, into a second associated reception bore (15), with an internal thread, of the other part-ring (3.1), a plurality of screws (13) being inserted at circumferential locations spaced apart from one another.

5. Multiple-row wire rolling bearing (18) according to Claim 1, **characterized in that** one of the carrying rings (19) has a continuous longitudinal slot (19.1), the circumferential extent of which can be varied with the aid of a tension element (21).

6. Multiple-row wire rolling bearing (18) according to Claim 5, **characterized in that** the carrying ring (19) has, at a first end (19.2) adjacent to the longitudinal slot (19.1), a radially outwardly open recess (19.4) which is continued in the direction of the longitudinal slot (19.1) by a through-bore (19.5), while a second end (19.3) arranged adjacently to the longitudinal slot (19.1) has a bore (19.6) which is provided with a thread (19.7) and into which a screw (21) provided with a thread (21.2) is inserted.

7. Multiple-row wire rolling bearing (1) according to Claim 1, **characterized in that** the cage is designed as a composite cage, of which the cage segments (9, 10) spaced apart from one another in the circumferential direction are connected to one another by means of a wire ring (11, 12).

## Revendications

1. Roulement à piste filiforme à plusieurs rangées (1, 18), constitué de deux bagues porteuses (2, 3, 19, 20) disposées concentriquement l'une dans l'autre, qui présentent des fils de roulement (6) dans des évidements (4, 5) tournés l'un vers l'autre, entre lesquels roulent au moins deux couronnes de corps de roulement constituées d'une cage et de rouleaux cylindriques (7, 8), au moins un fil de roulement (6) présentant deux pistes de roulement (6.3, 6.2, 6.1) disposées symétriquement l'une par rapport à _{'}autre et s'étendant suivant un angle (α) par rapport à un axe de palier, **caractérisé en ce que** tous les fils de roulement (6) présentent une section transversale identique prismatique, et sont reçus dans les évidements avec au moins deux surfaces d'appui (6.2-6.3, 6.3-6.2, 6.1-6.2, 6.2-6.1), les bagues porteuses (2, 3, 19, 20) sont réalisées d'une seule pièce et dans une bague porteuse (2, 19), le nombre des fils de roulement (6) est de n, et dans l'autre bague porteuse associée (3, 20), le nombre est de n+1.

2. Roulement à piste filiforme à plusieurs rangées (1, 18) selon la revendication 1, **caractérisé en ce que** le fil de roulement (6) présente un profil à quatre côtés ou un profil hexagonal.

3. Roulement à piste filiforme à plusieurs rangées (1) selon la revendication 1, **caractérisé en ce que** l'une des bagues porteuses (3) présente, dans la direction périphérique, une fente radiale (3.3), qui s'étend sur une partie de son épaisseur axiale, de sorte que deux bagues partielles (3.1, 3.2) espacées l'une de l'autre par la fente radiale (3.3) soient formées, lesquelles peuvent se rapprocher ou s'écarter l'une de l'autre dans la direction axiale par un élément de serrage (13).

4. Roulement à piste filiforme à plusieurs rangées (1) selon la revendication 3, **caractérisé en ce que** l'élément de serrage est une vis (13) pourvue d'un filetage (13.1), qui est insérée d'une part dans un premier alésage de réception (14) de l'une des bagues partielles (3.2) et d'autre part dans un deuxième alésage de réception associé (15) avec un filetage interne, de l'autre bague partielle (3.1), plusieurs vis (13) étant insérées en des endroits espacés les uns des autres sur la périphérie.

5. Roulement à piste filiforme à plusieurs rangées (18) selon la revendication 1, **caractérisé en ce que** l'une des bagues porteuses (19) présente une fente longitudinale continue (19.1) dont l'étendue périphérique peut être modifiée à l'aide d'un élément de serrage (21).

6. Roulement à piste filiforme à plusieurs rangées (18) selon la revendication 5, **caractérisé en ce que** la bague porteuse (19) présente sur une première extrémité (19.2) adjacente à la fente longitudinale (19.1) un évidement (19.4) ouverte radialement vers l'extérieur, qui se prolonge dans la direction de la fente longitudinale (19.1) par un alésage traversant (19.5), tandis qu'une deuxième extrémité (19.3) adjacente à la fente longitudinale (19.1) présente un alésage (19.6) pourvu d'un filetage (19.7), dans lequel est insérée une vis (21) pourvue d'un filetage (21.2).

7. Roulement à piste filiforme à plusieurs rangées (1) selon la revendication 1, **caractérisé en ce que** la cage est réalisée sous forme de cage composite, dont les segments de cage (9, 10) espacés l'un de l'autre dans la direction périphérique sont connectés l'un à l'autre par une bague filiforme (11, 12).
